# FASCICULE DE BREVET EUROPEEN

(11) **EP 4 133 191 B1**
(45) Date de publication et mention de la délivrance du brevet: **20.08.2025**
(21) Numéro de dépôt: 21723329.5
(22) Date de dépôt: 02.04.2021
(51) Int. Cl.: F16C 11/04, B64D 29/06

(54) **CHARNIERE D'ARTICULATION ENTRE DEUX PANNEAUX D'UN ENSEMBLE PROPULSIF D'AERONEF**
SCHARNIER ZWISCHEN ZWEI WÄNDEN EINER FLUGZEUGANTRIEBSEINHEIT
PIVOTING HINGE BETWEEN TWO PANELS OF AN AIRCRAFT PROPULSION SYSTEM

(30) Priorité: 10.04.2020 FR 2003640
(43) Date de publication de la demande: 15.02.2023
(73) Titulaire: Safran Nacelles, 76700 Gonfreville-l'Orcher (FR)
(72) Inventeur: AVENEL, Philippe, 77550 MOISSY-CRAMAYEL (FR); LORE, Xavier, 77550 MOISSY-CRAMAYEL (FR)
(74) Mandataire: Gevers & Orès
(86) Numéro de dépôt international: PCT/FR2021/050593
(87) Numéro de publication internationale: WO 2021/205105

(56) Documents cités:
- EP-A1- 3 184 434
- EP-A1- 3 553 331
- WO-A1-01/16450
- FR-A- 817 184

## Description

### Domaine technique de l'invention

L'invention concerne un ensemble propulsif d'aéronef comportant une charnière d'articulation entre deux de ses panneaux, notamment des panneaux d'une nacelle permettant l'accès à une turbomachine logée dans cette nacelle.

### Arrière-plan technique

Une nacelle d'un ensemble propulsif d'aéronef comporte une nacelle dans laquelle est logé un turboréacteur, cette nacelle comportant généralement au moins deux panneaux articulés en élytre qui permettent l'accès au turboréacteur. Les charnières d'articulation de ces panneaux, pour des raisons évidentes de protection et d'aérodynamisme sont généralement portées par des faces intérieures des panneaux et des parois de la nacelle afin d'éviter toute traînée aérodynamique. Par conséquent, les charnières ne sont pas aisément accessibles, ce qui complique leur assemblage.

Une telle charnière d'articulation comporte une chape, solidaire de l'un des panneaux, entre des oreilles de laquelle est reçu une contre-chape, qui est articulée dans la chape par l'intermédiaire d'un axe traversant la contre-chape et les oreilles de la chape.

Conventionnellement, l'axe est constitué d'une vis, dont une tête est en appui sur une des oreilles de la chape, et qui est immobilisée contre l'oreille opposée de la chape par un écrou. Une telle conception est décrite dans le document EP-3.184.434-A1.

Cette conception présente l'inconvénient de nécessiter, pour le serrage de la vis, l'utilisation d'une clé de chaque côté de la chape, manipulation qui n'est pas aisée du fait du faible espace disponible. Il n'est pas possible de transposer à une telle charnière les enseignements du document FR-817.184, qui décrit une charnière d'ameublement à deux axes opposés extractibles, car cette solution ne résoudrait pas le problème d'accessibilité.

Pour remédier à cet inconvénient des dispositifs, tels que celui décrit dans le document US-2008/0056814-A1 comportent un axe muni d'un dispositif expansible à billes de petit diamètre. Son introduction est réalisée d'un côté de la chape, puis au moyen d'une commande située du côté d'introduction dans la chape, on étend le dispositif à billes afin de permettre son verrouillage du côté opposé de la chape.

Cette conception présente l'inconvénient, du fait de la dimension réduite des billes de n'offrir qu'une tenue limitée de ce dispositif aux vibrations, de sorte que l'axe est à même de se déverrouiller et de s'extraire de la charnière du simple fait des vibrations, avec les risques de perte du panneau que cela implique.

On a aussi envisagé d'autres dispositifs comme celui du document EP-3.553.331-A1 comportant un axe immobilisé axialement par un dispositif expansible.

Il existe donc un réel besoin pour un ensemble propulsif d'aéronef comportant un premier et un second panneaux entre lesquels est agencée une charnière munie d'un axe pouvant être introduit d'un seul côté de la chape et garantissant ainsi un verrouillage fiable de celui-ci dans la charnière. Des charnières d'ameublement de ce type sont connues du document WO-01/16450-A1, mais n'ont jamais été appliquées à l'articulation de tels panneaux.

### Résumé de l'invention

L'invention satisfait à ce besoin en proposant une nouvelle conception de charnière comportant un axe pouvant être introduit d'un côté de la chape et pouvant être verrouillé de manière ferme dans la chape.

Dans ce but, l'invention propose un ensemble propulsif comportant une nacelle dans laquelle est logé un turboréacteur, ladite nacelle comportant au moins un premier et un second panneaux entre lesquels est agencée une charnière d'articulation comportant une chape solidaire du premier panneau et une contre-chape, solidaire du second panneau, qui est reçue entre deux oreilles de la chape, les chape et contre-chape étant traversées par un axe d'articulation, mobile entre une position étendue entre les oreilles de la chape et une position rétractée hors de la chape, caractérisé en ce que la charnière comporte des moyens de montage à baïonnette interposés entre l'axe et la chape, qui comportent :
- deux ergots opposés s'étendant radialement à partir de l'axe,
- un boîtier dont une semelle est fixée à une oreille de la chape extérieurement à la chape, qui est traversé par l'axe, et qui comporte un fût s'étendant à partir de la semelle à l'extérieur de la chape, recevant un mécanisme de verrouillage / déverrouillage des ergots en fonction d'une position axiale et angulaire de l'axe, et un canon tubulaire s'étendant à partir du fût, qui est destiné à recevoir et guider l'axe en translation et en rotation, pour permettre le passage de l'axe de sa positon étendue dans la chape à sa position rétractée hors de la chape et dans le boîtier,
- une poignée faisant saillie hors du canon à une extrémité libre de l'axe, permettant de manipuler l'axe axialement et angulairement.

Les moyens de montage à baïonnette sont bien connus de l'état de la technique en mécanique générale. Un tel moyen de montage consiste en un dispositif de fixation d'un objet à base cylindrique tel qu'un axe doté d'un ou de plusieurs ergots qui s'engagent par rotation dans des crans prévus à cet effet dans un autre élément cylindrique. Il réalise un verrouillage réversible agissant par un mouvement de translation de l'axe suivi d'un mouvement de rotation limité de l'axe afin de faire pénétrer le ou les ergots dans des crans, la sécurité du blocage étant obtenue par la pression d'un moyen de rappel élastique sur l'axe ou directement sur les ergots afin de maintenir ceux-ci dans les crans. L'opération de déverrouillage ne peut se faire que par l'action d'un effort de translation opposé à l'effort exercé par le moyen de rappel élastique, suivi d'une rotation en sens inverse pour extraire les ergots des crans, et d'un mouvement de translation inverse de l'axe.

Selon d'autres caractéristiques de l'ensemble propulsif :
- le mécanisme de verrouillage / déverrouillage comporte :
   - deux parois planes opposées, parallèles à l'axe, dans chacune desquelles est formée une première lumière comportant une fente d'immobilisation des ergots, d'orientation perpendiculaire à l'axe, configurée pour recevoir et immobiliser axialement entre ses bords d'orientation transversale un tronçon d'extrémité d'un ergot correspondant, et une fenêtre d'échappement et d'introduction des ergots, adjacente à la fente d'immobilisation, de forme sensiblement trapézoïdale, par laquelle ledit ergot peut s'échapper de ladite paroi et de ladite fente d'immobilisation lors d'une rotation de l'axe en vue de son déverrouillage et par un bord de laquelle l'ergot peut être guidé vers la fente d'immobilisation lors d'une rotation inverse de l'axe en vue de son verrouillage,
   - au moins un moyen de blocage des ergots dans les fentes d'immobilisation des premières lumières,
- le moyen de blocage des ergots comporte des cames, diamétralement opposées par rapport à l'axe, porteuses d'encoches complémentaires de tronçons intermédiaires desdits ergots et de rampes adjacentes auxdites encoches, qui sont reçues dans un logement interne du fût autour de l'axe, qui sont rappelées élastiquement en coulissement contre les ergots par au moins un ressort de rappel, et qui sont mobiles entre une position dans laquelle elles immobilisent les ergots dans les encoches et une position dans laquelle un pivotement de l'axe permet aux ergots de solliciter les rampes des cames à l'encontre de l'effort exercé par l'au moins un ressort de rappel puis de quitter les fentes d'immobilisation des premières lumières,
- les cames sont portées, diamétralement opposées l'une par rapport à l'autre, par la périphérie d'une bague qui est enfilée autour de l'axe, qui est immobilisée en rotation par rapport au boitier, et qui est rappelée élastiquement contre les ergots par un ressort enfilé autour de l'axe, prenant appui entre la bague et une face de la semelle traversée par l'axe,
- le boîtier comporte deux parois, agencées à 90 degrés des parois planes, dans lesquelles sont agencées deux fentes longitudinales de guidage, diamétralement opposées par rapport à l'axe, qui s'étendent longitudinalement au moins entre le fût et une partie intermédiaire du canon, et qui sont destinées à recevoir entre leurs bords les ergots après que l'axe ait pivoté de 90 degrés et que lesdits ergots se soient échappés des fentes d'immobilisation, afin de permettre aux ergots de sortir du boitier et permettre ainsi le coulissement des ergots et de l'axe dans le canon pour que ledit axe passe de sa position étendue dans la chape à sa position rétractée dans le boîtier,
- les fentes longitudinales de guidage se prolongent dans une partie intermédiaire du fût et la bague est immobilisée en rotation par rapport au boîtier par deux bras diamétralement opposés qui s'étendent à partir de la bague et qui sont reçus dans lesdites fentes longitudinales de guidage,
- le ressort est d'un diamètre inférieur à un perçage de la semelle traversé par l'axe, perçage par lequel il est introduit sur l'axe dans le boîtier, et les parois planes du boîtier comportent chacune à proximité de la semelle une deuxième lumière oblongue, d'orientation perpendiculaire à l'axe, qui est configurée pour permettre au moins l'introduction latérale d'une rondelle d'appui du ressort d'un diamètre supérieur à celui dudit perçage,
- les ergots sont formés par un pion cylindrique emmanché dans un perçage transversal de l'axe.

L'invention concerne aussi un procédé de verrouillage et de déverrouillage d'un axe d'une charnière de l'ensemble propulsif précédemment décrit, caractérisé en ce qu'il comporte :
- un étape de verrouillage comportant :
   - une première sous-étape de verrouillage au cours de laquelle, les ergots de l'axe étant reçus dans les fentes longitudinales, on sollicite axialement l'axe jusqu'à ce que les ergots sollicitent la bague et compriment le ressort,
   - une deuxième sous-étape de verrouillage au cours de laquelle on pivote l'axe de 90 degrés dans un premier sens jusqu'à ce que les ergots, guidés par un bord incliné de la fenêtre d'échappement et d'introduction de la première lumière et les rampes de la bague pénètrent dans les fentes d'immobilisation de la première lumière et dans les encoches de la bague, l'axe occupant alors sa position étendue,
   - une troisième sous-étape de verrouillage au cours de laquelle on relâche l'axe.
- un étape de déverrouillage comportant :
   - une première sous-étape de déverrouillage au cours de laquelle on pivote l'axe dans un second sens jusqu'à ce que les ergots sortent des encoches de la bague puis en sollicitant les rampes de la bague et en repoussant la bague, quittent les fentes d'immobilisation des premières lumières,
   - une deuxième sous-étape de déverrouillage au cours de laquelle en poursuivant le pivotement de l'axe jusqu'à 90 degrés, les ergots quittent les premières lumières et s'alignent avec fentes longitudinales de guidage,
   - une troisième sous-étape de déverrouillage au cours de laquelle on relâche l'axe afin que les ergots pénètrent dans la partie des fentes longitudinales de guidage s'étendant du canon sous l'effet de la poussée de la bague sollicitée par l'effort de rappel du ressort, l'axe occupant alors sa position rétractée.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue schématique de dessous d'une nacelle d'aéronef comportant des charnières selon l'invention ;
[Fig. 2] la figure 2 est une vue en perspective d'une charnière selon l'invention ;
[Fig. 3] la figure 3 est une vue de côté de l'axe représenté verrouillé en position étendue et des moyens de montage baïonnette de cet axe ;
[Fig. 4] la figure 4 est une vue en coupe de l'axe représenté verrouillé en position étendue et des moyens de montage baïonnette de cet axe ;
[Fig. 5] la figure 5 est une vue en perspective partielle avec arrachement de l'axe représenté verrouillé en position étendue et des moyens de montage à baïonnette de cet axe ;
[Fig. 6] la figure 6 est une vue en perspective des éléments internes au boîtier des moyens de montage à baïonnette ;
[Fig. 7] la figure 7 est une vue en perspective de détail d'une bague faisant partie des éléments internes de la figure 6 ;
[Fig. 8] la figure 8 est une vue en perspective de l'axe représenté verrouillé en position étendue et des moyens de montage à baïonnette de cet axe ;
[Fig. 9] la figure 9 est une vue fantôme de la figure 8 ;
[Fig. 10] la figure 10 est une vue fantôme en perspective du début d'une première sous-étape de verrouillage de l'axe ;
[Fig. 11] la figure 11 est une vue fantôme en perspective de la fin de la première sous-étape de verrouillage de l'axe ;
[Fig. 12] la figure 12 est une vue fantôme de coté en cours d'une deuxième sous-étape de verrouillage de l'axe ;
[Fig. 13] la figure 13 est une vue fantôme de côté de la fin de la deuxième sous-étape de verrouillage de l'axe ;
[Fig. 14] la figure 14 est une vue fantôme de côté d'une première sous étape de déverrouillage de l'axe ;
[Fig. 15] la figure 15 est une vue fantôme de côté au cours d'une deuxième sous-étape de déverrouillage de l'axe ;
[Fig. 16] la figure 16 est une vue fantôme en perspective de la fin de la deuxième sous-étape de déverrouillage de l'axe ;
[Fig. 17] la figure 17 est une vue fantôme en perspective en cours d'une troisième sous-étape de déverrouillage de l'axe ;
[Fig. 18] la figure 18 est une vue fantôme en perspective de la fin de la troisième sous-étape de déverrouillage de l'axe ;
[Fig. 19] la figure 19 est un diagramme-bloc illustrant les étapes d'un procédé de verrouillage et de déverrouillage selon l'invention.

### Description détaillée de l'invention

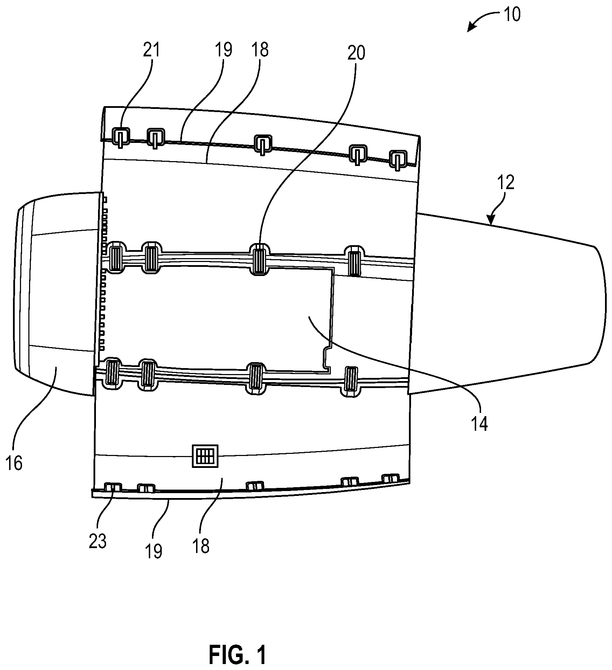

On a représenté à la figure 1 un ensemble propulsif 10 d'aéronef. De manière connue, l'ensemble propulsif 10 comporte une nacelle 12 dans laquelle est logé un turboréacteur 14. La nacelle 12 comporte différents panneaux 16 fixes et au moins deux panneaux pivotants en élytre 18, qui ont été représentés ici en position ouverte sur la figure 1, et qui permettent l'accès au turboréacteur 14. Ces panneaux pivotants 18 comportent des bords libres 19 qui peuvent être verrouillés les uns avec les autres par des verrous 21, 23 en position fermée. Ils sont articulés sur les panneaux fixes par l'intermédiaire de charnières 20, qui sont l'objet de l'invention.

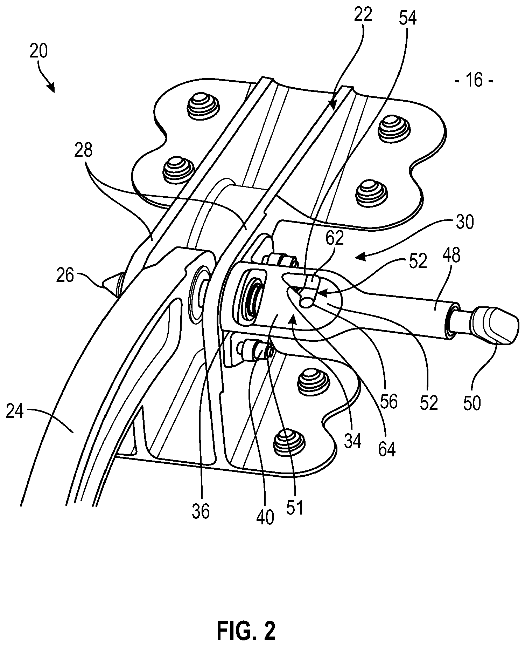

De manière connue, comme l'illustre la figure 2, chaque charnière 20 comporte une chape 22, solidaire d'un premier panneau, qui reçoit une contre-chape 24 solidaire d'un second panneau. Sur les figures 1 et 2, la chape 22 est solidaire d'un premier panneau fixe 16 et la contre chape 24 est solidaire d'un second panneau pivotant 18, mais il sera compris que cette disposition n'est pas limitative de l'invention.

Comme l'illustre la figure 2, chaque charnière 20 comporte un axe d'articulation 26 entre la chape 22 et la contre-chape 24.

Plus particulièrement, la contre-chape 24 est reçue entre deux oreilles 28 de la chape 22. Les oreilles 28 de la chape 22 et la contre-chape 24 sont traversées par l'axe 26.

L'axe 26 peut être extrait de la chape 22 de la contre-chape 24 pour permettre le démontage des panneaux 18. Il doit donc être à cet effet mobile entre une position étendue entre les oreilles 28 de la chape 22, comme représenté à la figure 2, et une position rétractée hors de la chape 22 qui permet la libération de la contre-chape 24.

Comme on le voit sur la figure 1, les charnières 20 sont agencées à l'intérieur de la nacelle 12, de sorte que leurs axes 26 sont peu accessibles, et en particulier peu accessibles à des clés permettant un montage et démontage par des moyens classiques tels que des vis et écrous. Il existe donc un réel besoin pour un montage des axes 26 de ces charnières 20 pouvant être réalisé sans outils et d'un seul côté de la charnière 20.

Pour satisfaire à ce besoin, l'invention propose des moyens 30 de montage à baïonnette interposés entre l'axe 26 et la chape 22, qui permettent son montage et son extraction de la chape 22 d'un seul côté de ladite chape 22.

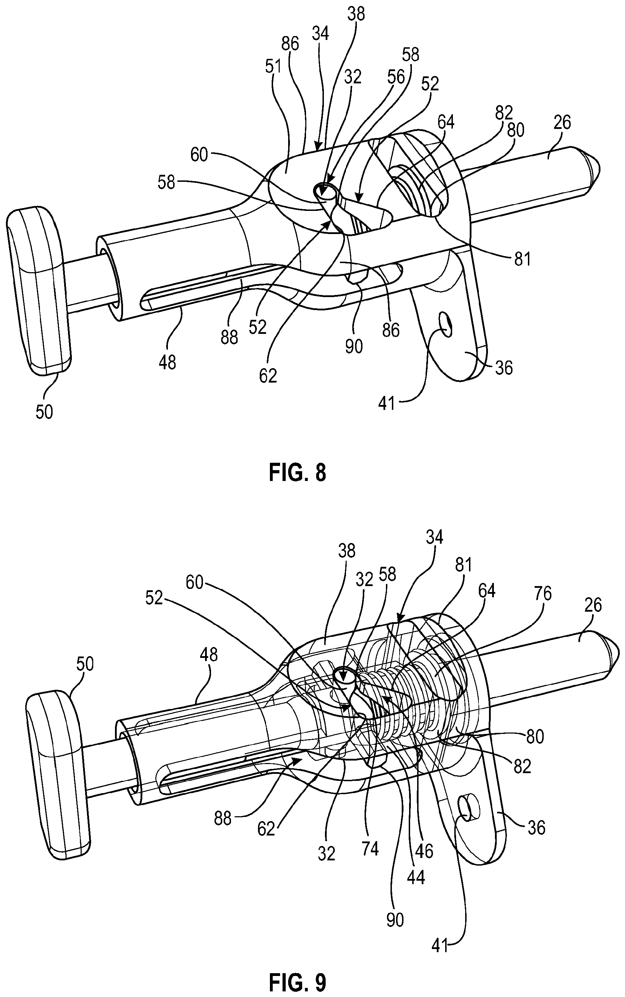

Comme l'illustre la vue fantôme de la figure 9, les moyens de montage à baïonnette 30 comportent en premier lieu deux ergots opposés 32 qui s'étendent radialement à partir de l'axe 26.

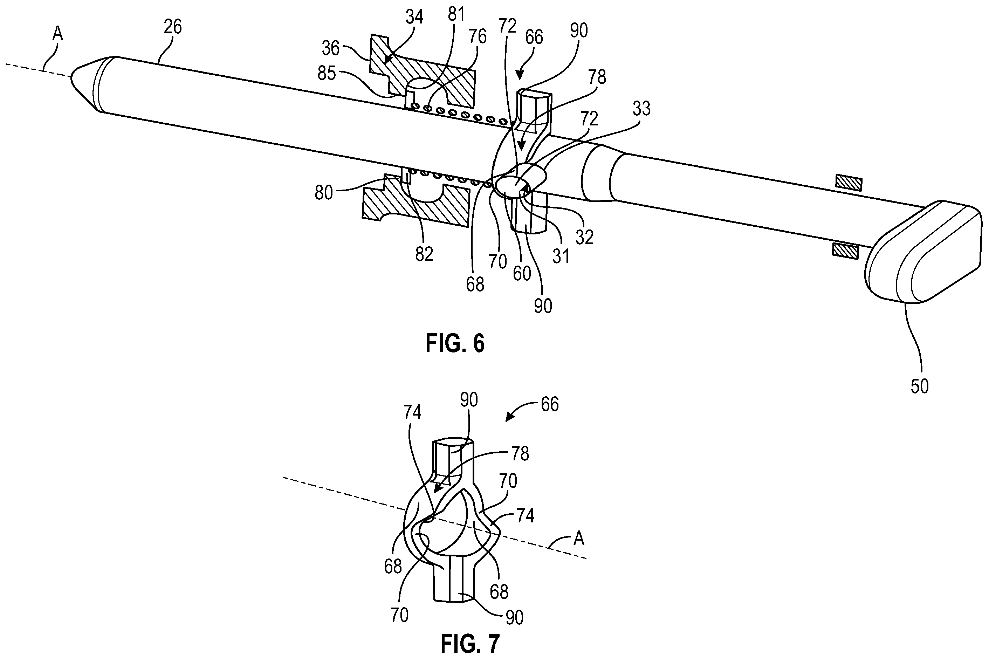

Les ergots 32 sont formés par exemple par un seul pion cylindrique 31 qui est emmanché dans un perçage transversal 33 de l'axe 26, comme l'illustre la figure 6.

Les moyens de montage à baïonnette 30 comportent en outre un boîtier 34 dont une semelle 36 est fixée à une oreille 28 de la chape 22, extérieurement à la chape 22, comme représenté à la figure 2. La semelle 36 est par exemple fixée au moyen de vis 40 sur l'oreille 28 de la chape 22, traversant des perçages 41 de la semelle 36.

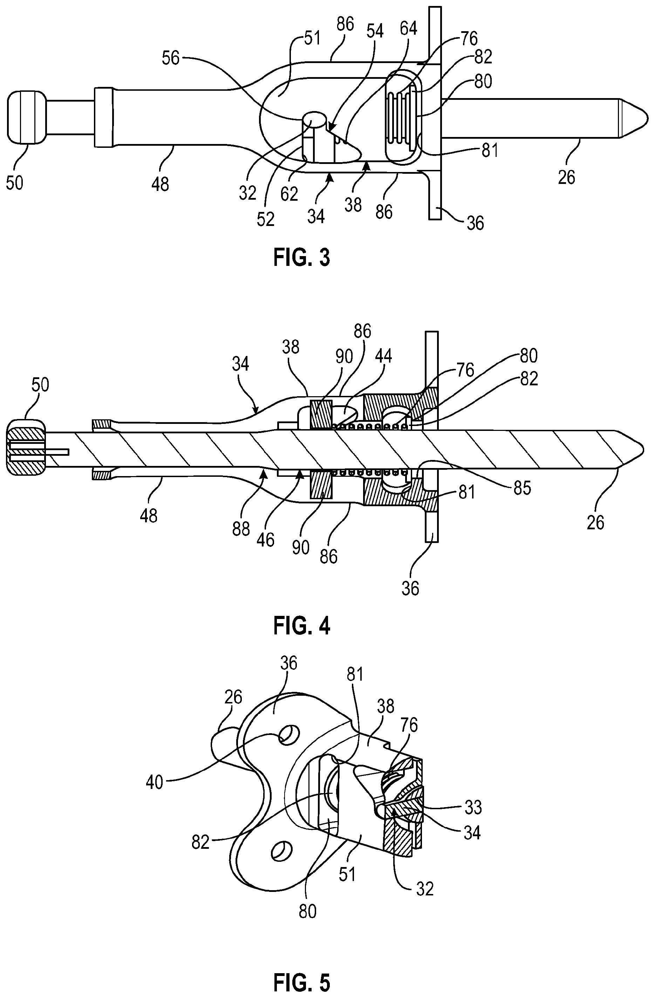

Le boîtier 34 est traversé par l'axe 26. L'axe 26 traverse un perçage 85 de la semelle 26, comme on peut le voir en particulier sur les figures 3 et 8. Le boîtier 34 comporte pour l'essentiel un fût 38 s'étendant à partir de la semelle 36 à l'extérieur de la chape 28, qui reçoit dans une logement interne 44 qui est plus particulièrement visible à la figure 4, un mécanisme de verrouillage / déverrouillage 46 des ergots 32 en fonction d'une position axiale et angulaire de l'axe 26.

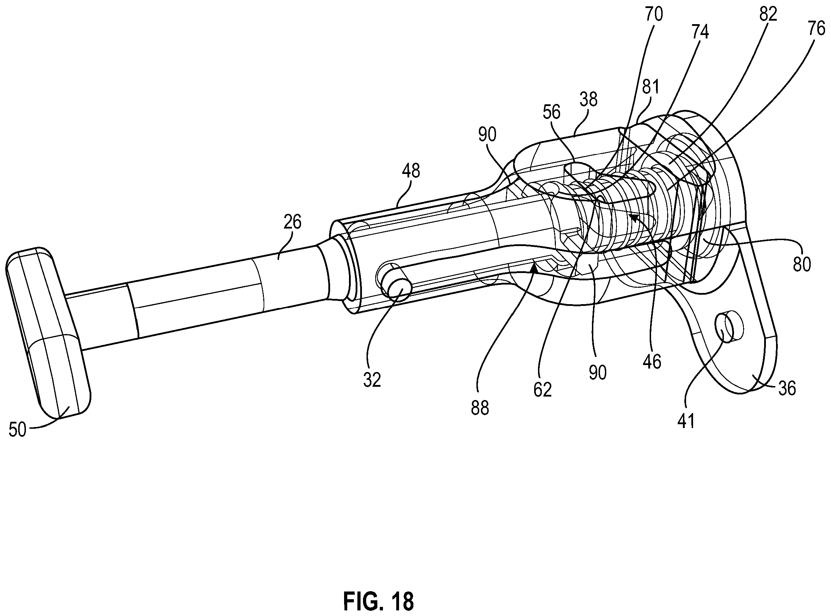

À partir de ce fût 38 s'étend un canon tubulaire 48 qui est destiné recevoir et guider l'axe 26 à la fois en translation et en rotation, pour permettre le passage de l'axe 26 de sa position étendue dans la chape 22, comme représenté aux figures 3 à 9, 13, et 14 à sa position rétractée hors de la chape 22 et dans le boitier 34, comme représenté à la figure 18.

Comme on l'a vu, le verrouillage et le déverrouillage de l'axe 26 par les moyens de montage à baïonnette 30 est obtenu en fonction de la position axiale et angulaire de l'axe 26, permettant le verrouillage ou le déverrouillage des ergots 32, et à cet effet il comporte une poignée 50 faisant saillie hors du canon 48 à une extrémité libre de l'axe 26, permettant de le manipuler axialement et angulairement.

Comme l'illustrent les figures 3 et 8, pour permettre le verrouillage ou le déverrouillage des ergots 32, le mécanisme de verrouillage / déverrouillage 46 comporte deux parois planes opposées 51 du fût 38, parallèles à l'axe 26, dans chacune desquelles est formée une première lumière 52 comportant une fente 56 d'immobilisation des ergots 32, d'orientation perpendiculaire à l'axe 26, et destinée à immobiliser axialement les ergots 32 et par conséquent l'axe 26.

Plus particulièrement, comme l'illustrent les figures 8 et 9, chaque fente 56 comporte des bords 58 d'orientation transversale qui sont destinées à recevoir et immobiliser axialement un tronçon d'extrémité 60 d'un ergot 32 correspondant.

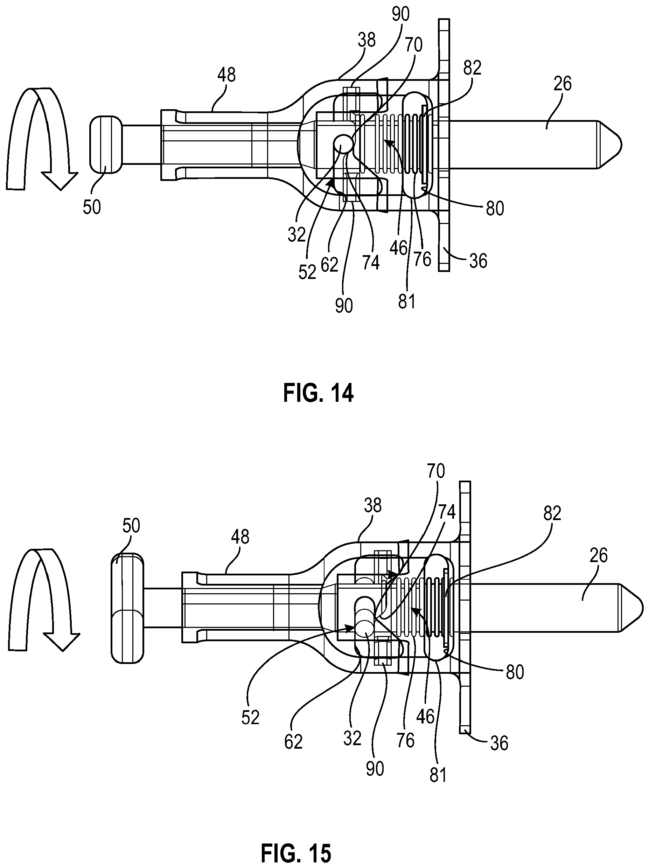

Les premières lumières 52 comportent aussi des fenêtres 62 d'échappement et d'introduction des ergots 32. Chaque fenêtre 62 est adjacente à la fente 56 d'immobilisation avec laquelle elle communique, et est de forme trapézoïdale. Cette fenêtre 62 permet le dégagement de l'ergot 32, afin que l'ergot 32 puisse s'échapper de la fente 56 d'immobilisation et de ce fait de la paroi 51 lors d'une rotation de l'axe 26 en vue de son déverrouillage, comme cela est représenté à la figure 15.

Sur les figures 14 à 18, on a représenté un déverrouillage des ergots 32 obtenu par une rotation de l'axe 26 dans le sens horaire. Il sera évidemment compris que si la première lumière 52 était inversée par rapport à la configuration qui a été représentée, le déverrouillage des ergots 32 serait obtenu par une rotation de l'axe 26 dans le sens inverse, c'est-à-dire le sens anti-horaire.

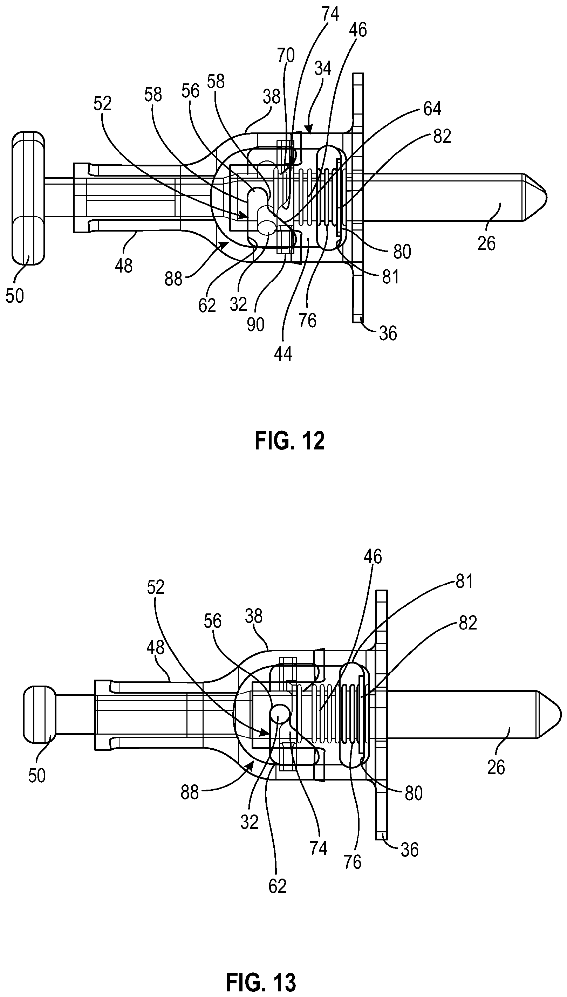

La fenêtre 62, comme on peut le voir aux figures 2 et 3, comporte un bord incliné 64 formant une rampe par laquelle 32 l'ergot peut être guidé vers la fente d'immobilisation lors d'une rotation inverse de l'axe 26 en vue de son verrouillage, c'est-à-dire ici dans le sens anti-horaire. Cette configuration, qui a été représentée à la figure 12, montre l'ergot 32 glissant sur le bord 64 avant de pénétrer dans la fente d'immobilisation 56.

Il convient de noter que le maintien des ergots 32 dans la fente d'immobilisation 56 est obtenu au moyen d'un moyen de blocage 66 qui va à présent être décrit.

Dans le principe, le moyen de blocage 66 des ergots 32 qui a été représenté dans le détail aux figures 6 et 7, comporte des cames 68, diamétralement opposées par rapport à l'axe 26 et rappelées élastiquement contre les ergots 32. Sur la figure 7, on a représenté la position de l'axe théorique A de l'axe 26.

Ces cames 68 sont reçues dans le logement interne 44 du fût 38, autour de l'axe 26.

Les cames 68 pourraient être portées par une face intérieure des parois opposées planes 51, et être indépendantes l'une de l'autre.

Toutefois comment va le voir dans la suite de la présente description, les cames 68 sont portées par un élément commun, pour des raisons de simplification de la fabrication.

Les cames 68 sont porteuses d'encoches 70 complémentaires de tronçons intermédiaires 72 des ergots 32. Elles n'interfèrent donc pas avec les tronçons d'extrémité 60 des ergots 32 qui ont été représentés précédemment. Les cames 68 comportent également des rampes 74 adjacentes aux encoches 70. Enfin, les cames 68 sont rappelées élastiquement en coulissement contre les ergots 32 par au moins un ressort de rappel 76.

Le rappel des cames 68 par au moins un ressort 76 présente l'avantage de garantir le blocage des ergots 32 quelles que soient les vibrations auxquelles les moyens de montage à baïonnette 30 sont soumis. Il permet notamment de garantir un contact continu des cames 68 sur les ergots 32 qui garantit l'intégrité de la charnière 20 et donc des panneaux pivotants 18.

Il sera donc compris que dans le cas où le mécanisme de verrouillage / déverrouillage comporterait des cames 68 indépendantes, celles-ci seraient rappelées par deux ressorts de rappel 76 indépendants, mais étant donné que dans la configuration qui a été représentée ici celles-ci sont portées par un élément commun, elles sont donc rappelées par un unique ressort de rappel 76,

Les cames 68 sont mobiles entre une position dans laquelle elles immobilisent les ergots 32 dans les encoches 70, comme représenté aux figures 6, 9, 13, et une position dans laquelle un pivotement de l'axe 26, comme représenté à la figure 15, permet aux ergots 32 solliciter les rampes 74 à l'encontre de l'effort exercé par l'au moins un ressort de rappel 76 puis de quitter les fentes d'immobilisation 56 des premières lumières 52.

Comme l'illustre la figure 6, les cames 68 sont portées, diamétralement opposées l'une par rapport à l'autre, par la périphérie d'une bague 78 qui est enfilée autour de l'axe 26, et qui est immobilisée en rotation par rapport au boitier 34. La bague 78 est rappelée élastiquement contre les ergots 32 par un unique ressort 76 qui est enfilé autour de l'axe 26 et qui prend appui entre la bague 78 et une face 80 de la semelle 36 dont le perçage 85 est traversé par l'axe 26. De la sorte, la bague 78 sollicite les ergots 32, particulièrement lorsque ceux-ci sont reçus dans les encoches 70, pour bloquer les ergots 32 et immobiliser ainsi l'axe 26 en rotation. Le détail de l'immobilisation en rotation de la bague 78 sera décrit ultérieurement dans la suite de la présente description.

Plus particulièrement, le ressort 68 ne prend pas appui directement sur la face 80 de la semelle 36 mais, pour des raisons de montage, sur une rondelle 82 d'appui rapportée qui est elle-même en appui sur cette face 80. Cette rondelle 82 permet d'éviter que le ressort 68 ne s'échappe du boîtier. En effet le ressort 68 est d'un diamètre inférieur au perçage 85 formé dans la face de fond 80 du boîtier 34 et il est introduit dans le boîtier 34 sur l'axe 26, à travers ce perçage 85. Pour éviter l'échappement du ressort 68 par ce perçage 85, les parois planes 51 du boîtier comportent, chacune à proximité de la semelle 36, une deuxième lumière oblongue 81, d'orientation perpendiculaire à l'axe, qui est configurée pour permettre au moins l'introduction latérale de la rondelle 82 d'appui dans le boitier 34, rondelle 82 qui reçoit en appui le ressort 68 et qui est d'un diamètre supérieur au perçage 85, évitant ainsi son échappement.

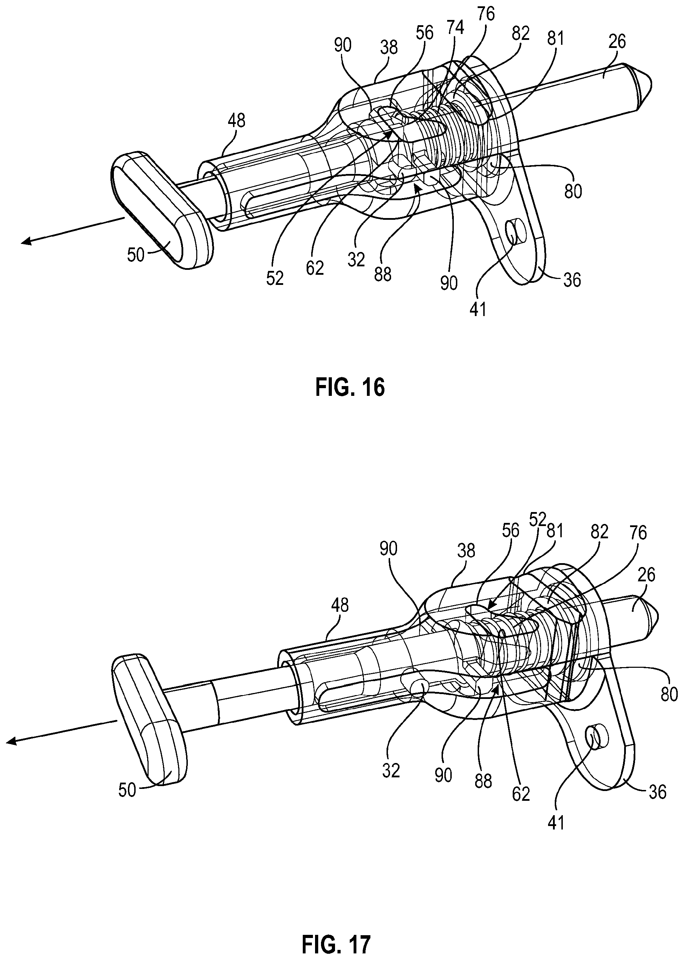

Comme l'illustrent par exemple la figure 3, 4, et 8, outre les deux parois planes opposées 51, le boîtier 34 comporte deux parois 86, agencées à 90 degrés des parois planes 51, dans lesquelles sont agencées deux fentes longitudinales de guidage 88, diamétralement opposées par rapport à l'axe 26, qui s'étendent longitudinalement au moins entre le fût 38 et une partie intermédiaire du canon 49. Ces fentes longitudinales 88 sont destinées à recevoir entre leurs bords les ergots 32 après que l'axe 26 ait pivoté de 90 degrés et que lesdits ergots 32 se soient échappés des fentes d'immobilisation 56, afin de permettre aux ergots de sortir du boitier 34 et permettre ainsi le coulissement des ergots 32 et donc de l'axe 26 dans le canon 48. Ceci permet le recul de l'axe 26 qui peut ainsi passer de sa position étendue dans la chape à sa position rétractée dans le boîtier 34, comme représenté aux figures 17 et 18.

Avantageusement, les fentes de guidage 88 ne sont pas utilisées que pour le guidage des ergots 32 mais permettent également l'immobilisation de la bague 78. À cet effet, les fentes longitudinales de guidage 88 se prolongent dans une partie intermédiaire du fût 38 et la bague 78 est immobilisée en rotation par rapport au boîtier par deux bras 90 diamétralement opposés qui s'étendent à partir de la bague 78 et qui sont reçus dans lesdites fentes 88 longitudinales de guidage. Ces bras 90 permettent non seulement d'éviter la rotation de la bague 78 et mais également de guider son coulissement lorsqu'elle est sollicitée axialement par les ergots 32 comme on va le voir dans la suite de la présente description

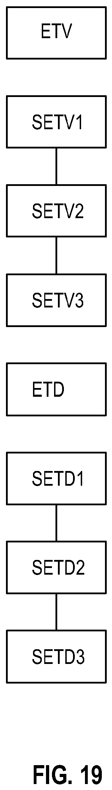

Dans cette configuration, comme l'illustre la figure 19, l'axe 26 peut être très simplement verrouillé et déverrouillé de la charnière 20 et en particulier de la chape 22 par un procédé comportant une étape de verrouillage ETV et une étape de déverrouillage ETD.

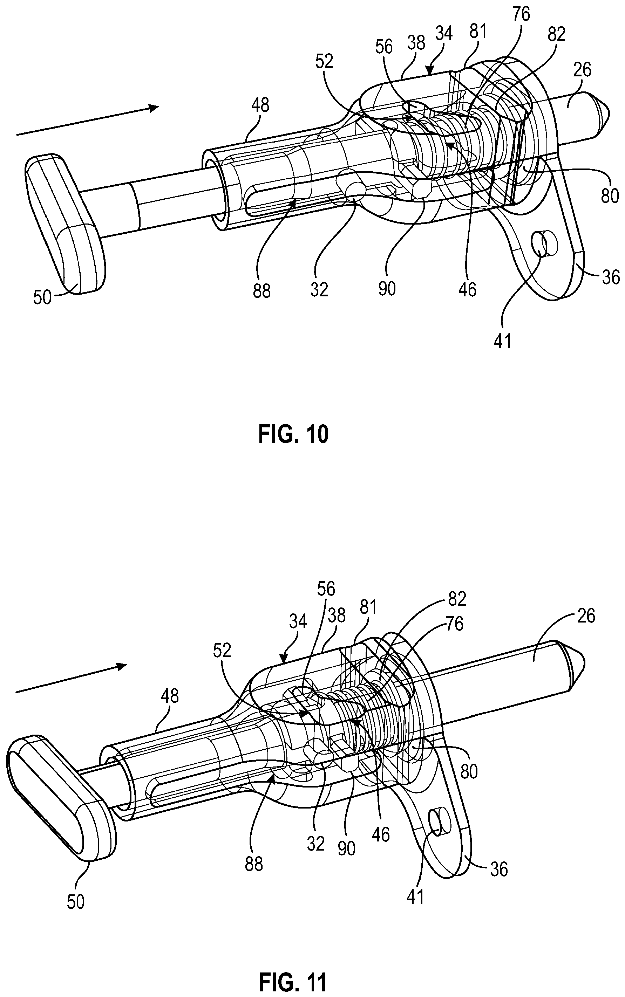

L'étape de verrouillage ETV comporte une première sous-étape de verrouillage SETV1 au cours de laquelle, les ergots 32 de l'axe étant reçus dans les fentes longitudinales 88 comme représenté à la figure 10, on sollicite axialement l'axe 26 jusqu'à ce que les ergots 32 sollicitent la bague 78 et compriment le ressort 76, comme représenté à la figure 11. Puis au cours d'une deuxième sous-étape de verrouillage SETV2 on pivote l'axe 26 de 90 degrés dans un premier sens anti-horaire comme représenté à la figure 12 jusqu'à ce que les ergots 32, guidés par le bord incliné 64 de la fenêtre 62 d'échappement et d'introduction de la première lumière 52 et par les rampes 74 de la bague 78, comme représenté à la figure 12, pénètrent dans les fentes d'immobilisation 56 de la première lumière 52 et dans les encoches 70 de la bague 78, comme représenté à la figure 13, l'axe 26 occupant alors sa position étendue, Puis l'étape de verrouillage ETV comporte enfin une troisième sous-étape de verrouillage SETV3 au cours de laquelle on relâche l'axe 26.

Inversement, l'étape de déverrouillage ETD comporte une première sous étape de déverrouillage SETD1 au cours de laquelle, à partir de la position de la figure 14, dans laquelle les ergots 32 sont reçus dans les fentes d'immobilisation 56, on pivote l'axe 26 un second sens horaire jusqu'à ce que les ergots 32 sortent des encoches 70 de la bague 78 puis en sollicitant les rampes 74 de la bague 78 et en repoussant la bague 78, quittent les fentes d'immobilisation 56 des premières lumières 52, comme représenté à la figure 15.

Puis l'étape de déverrouillage ETD comporte une deuxième sous-étape de déverrouillage SETD2 au cours de laquelle en poursuivant le pivotement de l'axe jusqu'à 90 degrés, les ergots quittent les premières lumières 52 et s'alignent avec fentes longitudinales 88 de guidage, comme représenté à la figure 16.

Enfin l'étape de déverrouillage ETD comporte une troisième sous-étape de déverrouillage SETD3 au cours de laquelle on relâche l'axe 26 comme représenté à la figure 17 afin que les ergots 32 pénètrent dans la partie des fentes longitudinales de guidage 88 s'étendant dans le canon 48 sous l'effet de la poussée de la bague 78 sollicitée par l'effort de rappel du ressort 68, l'axe 26 reculant dans le canon 48 et occupant alors sa position rétractée, comme représenté à la figure 18.

L'invention permet donc avantageusement d'introduire et d'extraire très facilement un axe 26 dans une chape 22 d'une charnière 20, d'un seul côté de cette chape, et sans outils, simplement en manipulant une poignée 50. L'invention propose de plus un système de verrouillage efficace et pérenne évitant les démantèlements de charnières comme cela était le cas dans les dispositifs connus de l'état de la technique.

## Revendications

1. Ensemble propulsif (10) d'aéronef comportant une nacelle (12) dans laquelle est logé un turboréacteur (14), ladite nacelle (12) comportant au moins un premier et un second panneaux (16, 18) entre lesquels est agencée une charnière (20) d'articulation comportant une chape (22) solidaire du premier panneau (16) et une contre-chape (24) , solidaire du second panneau (18), qui est reçue entre deux oreilles (28) de la chape (22), les chape (22) et contre-chape (24) étant traversées par un axe d'articulation (26), mobile entre une position étendue entre les oreilles (28) de la chape (22) et une position rétractée hors de la chape (22),
**caractérisé en ce que** la charnière comporte des moyens de montage à baïonnette (30) interposés entre l'axe (26) et la chape (22), qui comportent :
- deux ergots opposés (32) s'étendant radialement à partir de l'axe,
- un boîtier (34) dont une semelle (36) est fixée à une oreille (28) de la chape (22) extérieurement à la chape (22), qui est traversé par l'axe (26), et qui comporte un fût (38) s'étendant à partir de la semelle (36) à l'extérieur de la chape, recevant un mécanisme de verrouillage / déverrouillage (46) des ergots (32) en fonction d'une position axiale et angulaire de l'axe (26), et un canon tubulaire (48) s'étendant à partir du fût (38), qui est destiné à recevoir et guider l'axe (26) en translation et en rotation, pour permettre le passage de l'axe (26) de sa positon étendue dans la chape (22) à sa position rétractée hors de la chape (22) et dans le boitier (34),
- une poignée (50) faisant saillie hors du canon (48) à une extrémité libre de l'axe (26), permettant de manipuler l'axe (26) axialement et angulairement.

2. Ensemble propulsif (10) selon la revendication précédente, **caractérisé en ce que** le mécanisme de verrouillage / déverrouillage (46) comporte :
- deux parois planes opposées (51), parallèles à l'axe (26), dans chacune desquelles est formée une première lumière (52) comportant une fente (56) d'immobilisation des ergots (32), d'orientation perpendiculaire à l'axe (26), configurée pour recevoir et immobiliser axialement entre ses bords (58) d'orientation transversale un tronçon d'extrémité (60) d'un ergot correspondant (32), et une fenêtre d'échappement (62) et d'introduction des ergots (32), adjacente à la fente d'immobilisation (56), de forme sensiblement trapézoïdale, par laquelle ledit ergot (32) peut s'échapper de ladite paroi (51) et de ladite fente d'immobilisation (56) lors d'une rotation de l'axe (26) en vue de son déverrouillage et par un bord (64) de laquelle l'ergot (32) peut être guidé vers la fente d'immobilisation (56) lors d'une rotation inverse de l'axe (26) en vue de son verrouillage,
- un moyen de blocage (66) des ergots dans les fentes d'immobilisation des premières lumières.

3. Ensemble propulsif (10) selon la revendication précédente, **caractérisé en ce que** le moyen de blocage (66) des ergots comporte des cames (68), diamétralement opposées par rapport à l'axe (26), porteuses d'encoches (70) complémentaires de tronçons intermédiaires (72) desdits ergots (32) et de rampes (74) adjacentes auxdites encoches (70), qui sont reçues dans un logement interne (44) du fût (38) autour de l'axe (26), qui sont rappelées élastiquement en coulissement contre les ergots (32) par au moins un ressort de rappel (76), et qui sont mobiles entre une position dans laquelle elles immobilisent les ergots (32) dans les encoches (70) et une position dans laquelle un pivotement de l'axe (26) permet aux ergots (32) de solliciter les rampes (74) des cames (68) à l'encontre de l'effort exercé par l'au moins un ressort de rappel (76) puis de quitter les fentes (56) d'immobilisation des premières lumières (52).

4. Ensemble propulsif (10) selon la revendication précédente, **caractérisé en ce que** les cames (68) sont portées, diamétralement opposées l'une par rapport à l'autre, par la périphérie d'une bague (78) qui est enfilée autour de l'axe (26), qui est immobilisée en rotation par rapport au boitier (34), et qui est rappelée élastiquement contre les ergots (32) par un ressort de rappel unique (68) enfilé autour de l'axe (26), prenant appui entre la bague (78) et une face (80) de la semelle (36) traversée par l'axe (26).

5. Ensemble propulsif (10) selon l'une des revendications 2 à 4, **caractérisé en ce que** le boîtier (34) comporte deux parois (86), agencées à 90 degrés des parois planes (51), dans lesquelles sont agencées deux fentes longitudinales de guidage (88), diamétralement opposées par rapport à l'axe (26), qui s'étendent longitudinalement au moins entre le fût (38) et une partie intermédiaire du canon (48), et qui sont destinées à recevoir entre leurs bords les ergots (32) après que l'axe (26) ait pivoté de 90 degrés et que lesdits ergots (32) se soient échappés des fentes d'immobilisation (56), afin de permettre aux ergots (32) de sortir du boitier (34) et permettre ainsi le coulissement des ergots (32) et de l'axe (26) dans le canon (48) pour que ledit axe (26) passe de sa position étendue dans la chape (22) à sa position rétractée dans le boîtier (34).

6. Ensemble propulsif (10) selon la revendication précédente prise en combinaison avec la revendication 4, **caractérisé en ce que** les fentes longitudinales de guidage (88) se prolongent dans une partie intermédiaire du fût (38) et **en ce que** la bague (78) est immobilisée en rotation par rapport au boîtier (34) par deux bras (90) diamétralement opposés qui s'étendent à partir de la bague (78) et qui sont reçus dans lesdites fentes (88) longitudinales de guidage.

7. Ensemble propulsif (10) selon l'une des revendications 4 à 6, **caractérisé en ce que** le ressort (68) est d'un diamètre inférieur à un perçage (85) de la semelle (36) traversé par l'axe (26), perçage (85) par lequel il est introduit sur l'axe (26) dans le boîtier (34) et **en ce que** les parois planes (51) du boîtier (34) comportent chacune à proximité de la semelle (36) une deuxième lumière oblongue (81), d'orientation perpendiculaire à l'axe (26), qui est configurée pour permettre au moins l'introduction latérale d'une rondelle (82) d'appui du ressort (78) d'un diamètre supérieur à celui dudit perçage (85).

8. Ensemble propulsif (10) selon l'une des revendications 2 à 7, **caractérisé en ce que** les ergots (32) sont formés par un pion cylindrique (31) emmanché dans un perçage (33) transversal de l'axe (26).

9. Procédé de verrouillage et de déverrouillage d'un axe (26) d'une charnière (20) de l'ensemble propulsif selon l'une des revendications 5 à 8, **caractérisé en ce qu'**il comporte :
- un étape de verrouillage (ETV) comportant :
• Une première sous-étape de verrouillage (SETV1) au cours de laquelle, les ergots (32) de l'axe étant reçus dans les fentes longitudinales (88), on sollicite axialement l'axe (26) jusqu'à ce que les ergots (32) sollicitent la bague (78) et compriment le ressort,
• Une deuxième sous-étape de verrouillage (SETV2) au cours de laquelle on pivote l'axe de 90 degrés dans un premier sens jusqu'à ce que les ergots (32), guidés par un bord incliné (64) de la fenêtre (62) d'échappement et d'introduction des ergots (32) de la première lumière (52) et les rampes (74) de la bague (78) pénètrent dans les fentes d'immobilisation (56) de la première lumière (52) et dans les encoches (70) de la bague (78), l'axe (26) occupant alors sa position étendue,
• Une troisième sous-étape de verrouillage (SETV3) au cours de laquelle on relâche l'axe (26).
- un étape de déverrouillage (ETD) comportant :
• Une première sous étape de déverrouillage (SETD1) au cours de laquelle on pivote l'axe (26) dans un second sens jusqu'à ce que les ergots (32) sortent des encoches (70) de la bague (78) puis en sollicitant les rampes (74) de la bague (78) et en repoussant la bague (78), quittent les fentes (56) d'immobilisation des premières lumières (52),
• Une deuxième sous-étape de déverrouillage (SETD2) au cours de laquelle en poursuivant le pivotement de l'axe (26) jusqu'à 90 degrés, les ergots (32) quittent les premières lumières (52) et s'alignent avec fentes longitudinales de guidage (88),
• Une troisième sous-étape de déverrouillage (SETD3) au cours de laquelle on relâche l'axe (26) afin que les ergots (32) pénètrent dans la partie des fentes longitudinales de guidage (88) s'étendant dans le canon (48) sous l'effet de la poussée de la bague (78) sollicitée par l'effort de rappel du ressort, l'axe occupant alors sa position rétractée.

## Patentansprüche

1. Antriebsanordnung (10) eines Flugzeugs, umfassend eine Gondel (12), in der ein Turboluftstrahltriebwerk (14) untergebracht ist, wobei die Gondel (12) mindestens eine erste und eine zweite Platte (16, 18) umfasst, zwischen denen ein Gelenkscharnier (20) eingerichtet ist, das eine Abdeckung (22) umfasst, die fest mit der ersten Platte (16) verbunden ist, und eine Gegenabdeckung (24), die fest mit der zweiten Platte (18) verbunden ist und die zwischen zwei Lappen (28) der Abdeckung (22) aufgenommen ist, wobei die Abdeckung (22) und Gegenabdeckung (24) von einer Gelenkachse (26) durchlaufen werden, die zwischen einer zwischen den Lappen (28) der Abdeckung (22) ausgestreckten Position und einer zurückgezogenen Position außerhalb der Abdeckung (22) beweglich ist,
**dadurch gekennzeichnet, dass** das Scharnier zwischen der Achse (26) und der Abdeckung (22) eingefügte Bajonettmontagemittel (30) umfasst, die Folgendes umfassen:
- zwei gegenüberliegende Zapfen (32), die sich ausgehend von der Achse radial erstrecken,
- ein Gehäuse (34), bei dem eine Sohle (36) an einer Lasche (28) der Abdeckung (22) außerhalb der Abdeckung (22) befestigt ist, das von der Achse (26) durchlaufen wird und das einen Schaft (38) umfasst, der sich ausgehend von der Sohle (36) auf der Außenseite der Abdeckung erstreckt, das einen Verriegelungs-/Entriegelungsmechanismus (46) der Zapfen (32) in Abhängigkeit von einer axialen und winkligen Position der Achse (26) und eine rohrförmige Buchse (48) umfasst, die sich ausgehend vom Schaft (38) erstreckt und die dazu vorgesehen ist, die Achse (26) in einer Verschiebung und in einer Drehung aufzunehmen und zu führen, um den Durchgang der Achse (26) von ihrer ausgestreckten Position in der Abdeckung (22) zu ihrer zurückgezogenen Position außerhalb der Abdeckung (22) und im Gehäuse (34) zu ermöglichen,
- einen Griff (50), der aus der Buchse (48) an einem freien Ende der Achse (26) hervorsteht, wodurch ermöglicht wird, die Achse (26) axial und winklig zu handhaben.

2. Antriebsanordnung (10) nach dem vorstehenden Anspruch, **dadurch gekennzeichnet, dass** der Verriegelungs-/Entriegelungsmechanismus (46) Folgendes umfasst:
- zwei gegenüberliegende ebene Wände (51) parallel zur Achse (26), in denen jeweils ein erster Kanal (52) gebildet ist, der einen Schlitz (56) zur Immobilisierung der Zapfen (32) mit einer Ausrichtung senkrecht zur Achse (26) umfasst, der konfiguriert ist, um zwischen seinen Rändern (58) mit querverlaufender Ausrichtung einen Endabschnitt (60) eines entsprechenden Zapfens (32) aufzunehmen und axial zu immobilisieren, und ein Fenster zum Herauslassen (62) und Einsetzen der Zapfen (32), angrenzend an den Immobilisierungsschlitz (56), mit im Wesentlichen trapezförmiger Form, durch das der Zapfen (32) bei einer Drehung der Achse (26) zu dessen Entriegelung aus der Wand (51) und dem Immobilisierungsschlitz (56) herausgelassen werden kann, und durch einen Rand (64), durch den der Zapfen (32) bei einer entgegengesetzten Drehung der Achse (26) zu dessen Verriegelung zum Immobilisierungsschlitz (56) geführt werden kann,
- ein Blockiermittel (66) der Zapfen in den Immobilisierungsschlitzen der ersten Kanäle.

3. Antriebsanordnung (10) nach dem vorstehenden Anspruch, **dadurch gekennzeichnet, dass** das Blockiermittel (66) der Zapfen Nocken (68) umfasst, die in Bezug auf die Achse (26) diametral gegenüberliegend sind und die Rastungen (70) tragen, die komplementär zu Zwischenabschnitten (72) der Zapfen (32) sind, und Rampen (74) angrenzend an die Rastungen (70), die in einem inneren Sitz (44) des Schafts (38) um die Achse (26) herum aufgenommen sind, die durch mindestens eine Rückstellfeder (76) elastisch gleitend zu den Zapfen (32) rückgestellt werden und die mobil sind zwischen einer Position, bei der sie die Zapfen (32) in den Rastungen (70) immobilisieren, und einer Position, bei der ein Schwenken der Achse (26) den Zapfen (32) ermöglicht, die Rampen (74) der Nocken (68) bei der durch die mindestens eine Rückstellfeder (76) ausgeübte Kraft zu beanspruchen, dann die Immobilisierungsschlitze (56) der ersten Kanäle (52) zu verlassen.

4. Antriebsanordnung (10) nach dem vorstehenden Anspruch, **dadurch gekennzeichnet, dass** die Nocken (68) in Bezug zueinander diametral gegenüberliegend durch den Umfang eines um die Achse (26) herum gestülpten Rings (78) getragen werden, der in Bezug auf das Gehäuse (34) in der Drehung immobilisiert wird und der durch eine einzige, um die Achse (26) herum gestülpte Rückstellfeder (68), die zwischen dem Ring (78) und einer von der Achse (26) durchlaufenen Fläche (80) der Sohle (36) aufliegt, elastisch zu den Zapfen (32) rückgestellt wird.

5. Antriebsanordnung (10) nach einem der Ansprüche 2 bis 4, **dadurch gekennzeichnet, dass** das Gehäuse (34) zwei Wände (86) umfasst, die um 90 Grad von den ebenen Wänden (51) eingerichtet sind, in den zwei Führungslängsschlitze (88) eingerichtet sind, die in Bezug auf die Achse (26) diametral gegenüberliegend sind, die sich in Längsrichtung mindestens zwischen dem Schaft (38) und einem Zwischenteil der Buchse (48) erstrecken und die dazu vorgesehen sind, zwischen ihren Rändern die Zapfen (32) aufzunehmen, nachdem die Achse (26) um 90 Grad geschwenkt wurde und die Zapfen (32) aus den Immobilisierungsschlitzen (56) herausgelassen wurden, um zu ermöglichen, dass die Zapfen (32) aus dem Gehäuse (34) heraustreten und somit das Gleiten der Zapfen (32) und der Achse (26) in der Buchse (48) zu ermöglichen, damit die Achse (26) aus ihrer ausgestreckten Position in der Abdeckung (22) in ihre zurückgezogene Position im Gehäuse (34) übergehen kann.

6. Antriebsanordnung (10) nach dem vorstehenden Anspruch in Kombination mit Anspruch 4 genommen, **dadurch gekennzeichnet, dass** sich die Führungslängsschlitze (88) in einen Zwischenteil des Schafts (38) verlängern und dadurch, dass der Ring (78) in Bezug auf das Gehäuse (34) durch zwei diametral gegenüberliegende Arme (90), die sich ausgehend vom Ring (78) erstrecken und die in den Führungslängsschlitzen (88) aufgenommen sind, in der Drehung immobilisiert ist.

7. Antriebsanordnung (10) nach einem der Ansprüche 4 bis 6, **dadurch gekennzeichnet, dass** die Feder (68) einen Durchmesser aufweist, der kleiner ist als eine von der Achse (26) durchlaufene Bohrung (85) der Sohle (36), wobei er durch die Bohrung (85) auf die Achse (26) im Gehäuse (34) eingesetzt wird, und dadurch, dass die ebenen Wände (51) des Gehäuses (34) jeweils in der Nähe der Sohle (36) einen zweiten länglichen Kanal (81) mit einer Ausrichtung senkrecht zur Achse (26) umfassen, der konfiguriert ist, um mindestens das seitliche Einsetzen einer Auflagescheibe (82) der Feder (78) mit einem Durchmesser, der größer ist als jener der Bohrung (85), zu ermöglichen.

8. Antriebsanordnung (10) nach einem der Ansprüche 2 bis 7, **dadurch gekennzeichnet, dass** die Zapfen (32) durch einen zylinderförmigen Stift (31) gebildet sind, der in eine querverlaufende Bohrung (33) der Achse (26) eingepresst ist.

9. Verfahren zur Verriegelung und Entriegelung einer Achse (26) eines Scharniers (20) der Antriebsanordnung nach einem der Ansprüche 5 bis 8, **dadurch gekennzeichnet, dass** es Folgendes umfasst:
- einen Verriegelungsschritt (ETV), umfassend:
- einen ersten Verriegelungsteilschritt (SETV1), während dem die Zapfen (32) der Achse in Längsschlitzen (88) aufgenommen werden, die Achse (26) axial beansprucht wird, bis die Zapfen (32) den Ring (78) beanspruchen und die Feder zusammendrücken,
- einen zweiten Verriegelungsteilschritt (SETV2), während dem die Achse um 90 Grad in eine erste Richtung geschwenkt wird, bis die Zapfen (32), geführt von einem geneigten Rand (64) des Fensters (62) zum Herauslassen und Einsetzen der Zapfen (32) vom ersten Kanal (52) und die Rampen (74) des Rings (78) in die Immobilisierungsschlitze (56) des ersten Kanals (52) und in die Rastungen (70) des Rings (78) eindringen, wobei die Achse (26) dann ihre ausgestreckte Position einnimmt,
- einen dritten Verriegelungsteilschritt (SETV3), während dem die Achse (26) gelöst wird,
- einen Entriegelungsschritt (ETD), umfassend:
- einen ersten Entriegelungsteilschritt (SETD1), während dem die Achse (26) in eine zweite Richtung geschwenkt wird, bis die Zapfen (32) aus den Rastungen (70) des Rings (78) heraustreten, dann durch Beanspruchen der Rampen (74) des Rings (78) und durch Zurückschieben des Rings (78) die Immobilisierungsschlitze (56) der ersten Kanäle (52) verlassen,
- einen zweiten Entriegelungsteilschritt (SETD2), während dem durch Fortfahren mit dem Schwenken der Achse (26) bis 90 Grad die Zapfen (32) die ersten Kanäle (52) verlassen und sich mit den Führungslängsschlitzen (88) ausrichten,
- einen dritten Entriegelungsteilschritt (SETD3), während dem die Achse (26) gelöst wird, damit die Zapfen (32) unter der Einwirkung des Schubs des Rings (78), der von der Rückstellkraft der Feder beansprucht wird, in den Teil der Führungslängsschlitze (88) eindringen, der sich in der Buchse (48) erstreckt, wobei die Achse dann ihre zurückgezogene Position einnimmt.

## Claims

1. An aircraft propulsion assembly (10) comprising a nacelle (12) wherein a turbojet engine (14) is housed, said nacelle (12) comprising at least a first and a second panel (16, 18) between which is arranged an articulation hinge (20) comprising a clevis (22) secured to the first panel (16) and a counter-clevis (24), secured to the second panel (18), which is received between two ears (28) of the clevis (22), the clevis (22) and counter-clevis (24) being passed through by an articulation axle (26), movable between an extended position between the ears (28) of the clevis (22) and a retracted position outside the clevis (22),
**characterised in that** the hinge comprises bayonet mounting means (30) interposed between the axle (26) and the clevis (22), which comprise:
- two opposing lugs (32) extending radially from the axle,
- a case (34), a base plate (36) of which is attached to an ear (28) of the clevis (22) outside of the clevis (22), through which the axle (26) passes, and which comprises a barrel (38) extending from the base plate (36) outside of the clevis (22), receiving a locking/unlocking mechanism (46) for the lugs (32) as a function of an axial and angular position of the axle (26), and a tubular cannon (48) extending from the barrel (38), which is intended to receive and guide the axle (26) in translation and in rotation, to allow the axle (26) to pass from its extended position in the clevis (22) to its retracted position outside the clevis (22) and into the case (34),
- a handle (50) projecting from the cannon (48) at a free end of the axle (26), allowing the axle (26) to be manipulated axially and angularly.

2. The propulsion assembly (10) according to the preceding claim, **characterised in that** the locking/unlocking mechanism (46) comprises:
- two opposite flat walls (51), parallel to the axle (26), in each of which is formed a first slot (52) comprising a slit (56) for immobilising the lugs (32), oriented perpendicularly to the axle (26), configured to receive and axially immobilize between its transversely oriented edges (58) an end stretch (60) of a corresponding lug (32), and a window (62) for escaping and introducing the lugs (32), adjacent to the immobilisation slit (56), of substantially trapezoidal shape, through which said lug (32) can escape from said wall (51) and from said immobilisation slit (56) upon a rotation of the axle (26) for unlocking thereof and through an edge (64) of which the lug (32) can be guided towards the immobilisation slit (56) upon a reverse rotation of the axle (26) for its locking,
- a means (66) for locking the lugs in the slits for immobilising the first slots.

3. The propulsion assembly (10) according to the preceding claim, **characterised in that** the locking means (66) for the lugs comprises cams (68), diametrically opposed with respect to the axle (26), carrying notches (70) complementary to intermediate stretches (72) of said lugs (32) and ramps (74) adjacent to said notches (70), which are received in an internal housing (44) of the barrel (38) about the axle (26), which are elastically returned in sliding against the lugs (32) by at least one return spring (76) and which are movable between a position in which they immobilize the lugs (32) in the notches (70) and a position in which a pivoting of the axle (26) allows the lugs (32) to stress the ramps (74) of the cams (68) against the force exerted by the at least one return spring (76) and then to leave the slits (56) for immobilising the first slots (52).

4. The propulsion assembly (10) according to the preceding claim, **characterised in that** the cams (68) are carried, diametrically opposite each other, by the periphery of a ring (78) which is slipped on about the axle (26), which is immobilized in rotation with respect to the case (34), and which is elastically returned against the lugs (32) by a single return spring (68) slipped on about the axle (26), supported between the ring (78) and a face (80) of the base plate (36) passed through by the axle (26).

5. The propulsion assembly (10) according to one of claims 2 to 4, **characterised in that** the case (34) comprises two walls (86), arranged at 90 degrees to the flat walls (51), in which are arranged two longitudinal guiding slits (88), diametrically opposed with respect to the axle (26), which extend longitudinally at least between the barrel (38) and an intermediate portion of the cannon (48), and which are intended to receive between their edges the lugs (32) after the axle (26) has rotated by 90 degrees and said lugs (32) have escaped from the immobilisation slits (56), so as to allow the lugs (32) to come out of the case (34) and thus allow the lugs (32) and the axle (26) to slide in the cannon (48) so that said axle (26) passes from its extended position in the clevis (22) to its retracted position in the case (34).

6. The propulsion assembly (10) according to the preceding claim taken in combination with claim 4, **characterised in that** the longitudinal guiding slits (88) extend into an intermediate portion of the barrel (38) and **in that** the ring (78) is immobilized in rotation with respect to the case (34) by two diametrically opposed arms (90) which extend from the ring (78) and which are received in said longitudinal guiding slits (88).

7. The propulsion assembly (10) according to one of claims 4 to 6, **characterised in that** the spring (68) has a diameter smaller than a piercing (85) in the base plate (36) through which the axle (26) passes, piercing (85) through which it is introduced on the axle (26) into the case (34), and **in that** the flat walls (51) of the case (34) each comprise, in the vicinity of the base plate (36), a second oblong slot (81), oriented perpendicular to the axle (26), which is configured to allow at least the lateral introduction of a washer (82) for supporting the spring (78) of a diameter greater than that of said piercing (85).

8. The propulsion assembly (10) according to one of claims 2 to 7, **characterised in that** the lugs (32) are formed by a cylindrical pin (31) sleeved into a piercing (33) transverse of the axle (26).

9. A method for locking and unlocking an axle (26) of a hinge (20) of the propulsion assembly according to one of claims 5 to 8, **characterised in that** it comprises:
- a locking step (ETV) comprising:
• A first locking sub-step (SETV1) in which the lugs (32) of the axle being received in the longitudinal slits (88), the axle (26) is axially stressed until the lugs (32) stress the ring (78) and compress the spring,
• A second locking sub-step (SETV2) in which the axle is rotated by 90 degrees in a first direction until the lugs (32), guided by an inclined edge (64) of the escape and introduction window (62) for the lugs (32) of the first slot (52) and the ramps (74) of the ring (78) enter the immobilisation slits (56) of the first slot (52) and the notches (70) of the ring (78), the axle (26) then occupying its extended position,
• A third locking sub-step (SETV3) in which the axle (26) is released.
- an unlocking step (ETD) comprising:
• A first unlocking sub-step (SETD1) in which the axle (26) is rotated in a second direction until the lugs (32) come out of the notches (70) of the ring (78) and then, by stressing the ramps (74) of the ring (78) and by pushing the ring (78) back, leave the slits (56) for immobilising the first slots (52),
• A second unlocking sub-step (SETD2) in which by continuing to rotate the axle (26) up to 90 degrees, the lugs (32) leave the first slots (52) and align with longitudinal guiding slits (88),
• A third unlocking sub-step (SETD3) in which the axle (26) is released so that the lugs (32) enter the portion of the longitudinal guiding slits (88) extending into the cannon (48) under the effect of the thrust of the ring (78) stressed by the return force of the spring, the axle then occupying its retracted position.
